# EUROPEAN PATENT APPLICATION

(11) **EP 2 557 882 A1**
(43) Date of publication of application: **13.02.2013**
(21) Application number: 11006614.9
(22) Date of filing: 10.08.2011
(51) Int. Cl.: H04W 72/14

(54) **Method and apparatus for flow-optimized scheduling**

(71) Applicant: MIMOON GmbH, 47057 Duisburg (DE)
(72) Inventor: Lüert, Oliver, 44793 Bochum (DE)
(74) Representative: Eisenführ, Speiser & Partner

(57) **Abstract**

The present invention relates to a method and apparatus for scheduling radio resources of a terminal device, wherein a scheduler in an access device is extended to proactively schedule uplink grants for anticipated uplink traffic (e.g. acknowledgements), when downlink traffic of a bidirectional dataflow (e.g. acknowledge-based traffic) is being scheduled. Thereby, a delay penalty of the terminal device to ask for uplink resources can be avoided.

## Description

### FIELD OF THE INVENTION

The present invention relates to a method, apparatus and computer program product for scheduling resources in time and frequency domains in communication networks.

### BACKGROUND OF THE INVENTION

Fourth generation (4G) cellular systems, such as the Long Term Evolution (LTE) system, will provide broadband wireless access with quality of service (QoS). It is a task of a scheduler at the Medium Access Control (MAC) layer of an access device or base station (i.e. enhanced NodeB or eNodeB or eNB in LTE terminology) to schedule transmissions over the LTE air interface guaranteeing QoS requirements assigned to radio bearers.

The scheduler performs a dynamic and fast resource allocation, taking into account instantaneous link quality information and instantaneous packet arrival data rate. By following fluctuations of radio link quality and adapting its transmission properties (modulation and coding (MCS), scheduling resources, power allocation, etc.), the radio channel capacity is better utilized.

The scheduler receives inputs from various sources which guide the scheduling procedure. The output of the scheduler is a series of resource assignments for a downlink and uplink subframe. Resource assignments are defined in terms of resource blocks (RBs). In LTE, a resource block occupies one slot in the time domain and twelve subcarriers in the frequency domain. The resource assignments output by the scheduler indicate the size of each transport block and what RBs are to be used in sending it to the terminal device (i.e. user equipment (UE)) and eNodeB via Downlink Shared Channel (DL-SCH) and Uplink Shared Channel (UL-SCH), respectively. The resource assignment information is sent on the Physical Downlink Control Channel (PDCCH). Each UE monitors the PDCCH to obtain control information about assignments destined to it.

In High Speed Uplink Packet Access (HSUPA) and LTE networks, UL scheduling of shared channel resources is done in the base station (e.g. eNB). The terminal device (e.g. UE) has to inform the base station about UL buffer fill in order to get an UL allocation.

In LTE systems, based on 3^{rd} Generation Partnership Program (3GPP) specification "TS 36.321 V8.3.0," a buffer status report (BSR) is used to provide the network with information about the amount of data in uplink (UL) buffers of a terminal device. The BSR will generate a BSR MAC control element, which includes information about the amount of data available for transmission in the Radio Link Control (RLC) layer and Packet Data Convergence Protocol (PDCP) layer, when being triggered. The BSR shall be triggered when UL data becomes available for transmission and the data belongs to a logical channel with higher priority than those for which data already existed in the transmission buffer of the terminal device, in which case the BSR is referred to as "Regular BSR." When the BSR is triggered but there is no allocated resource for new transmission, the terminal device would then trigger a scheduling request (SR) procedure for requesting uplink resources, i.e. UL-SCH resources, to send a BSR MAC control element. It is however noted that only the Regular BSR can trigger the SR procedure when the UE has no UL resources allocated for new transmission for a current transmission time interval (TTI).

Thus, the terminal device first needs to get an initial grant in order to inform about the buffer fill. If scheduling request resources are allocated to the terminal device, the terminal device can use the scheduling request to inform the base station about pending UL data. In case those resources are not configured, the terminal can use the random access procedure to gain an UL allocation. Both procedures require waiting for the scheduling and random access cannel (RACH) resource.

However, in data transmission via the Internet based on e.g. the Transmission Control Protocol (TCP), a constant stream of DL and UL data is expected leading to a saturation of the link budget and using all the resources available in a network. Usually, a window-based congestion control is applied where for each TCP data packet, one TCP acknowledgement (ACK) is delivered in the reverse direction. For TCP ACKs a sending window is moved but also increased.

As described above in the nature of TCP data streaming the TCP stops sending data, when the end of the sending window has been reached. A constant ACK flow is required to move the sending window further, so that constant data flow is possible. Due to the described mechanism in UL, in a situation where the terminal device downloads data from e.g. a web or File Transfer Protocol (FTP) server, the ACK flow gets an undesirable delay penalty. When DL packets are being sent, the ACKs are stored in the UL buffers and the terminal has to undergo the process of scheduling requests or RACH procedure, to get an UL grant to be able to send those packets. This delay penalty results in a very bursty download and DL data transfer and a lower throughput, as the download stops at the sending window edge. When the ACKs are then received, the server generates a bigger burst than before (due to the increasing sending window) and then stops again at the window edge, while it has to wait for the UL procedure to receive the ACKs again. Thereby also ACKs are coming in even bigger and bigger bursts, due to the increasing TCP window size and more ACKs are being generated by the receiver at the terminal device. System resources are thus wasted by forcing the terminal into a scheduling request or random access procedure.

### SUMMARY

It is an object of the present invention to provide a flexible scheduler or scheduling function which provides improved resource utilization for data transmissions with window-based congestion control.

This object is achieved by a method of scheduling radio resources of a terminal device, the method comprising:
● detecting a type of traffic to be scheduled to the terminal device in downlink direction; and
● scheduling an uplink grant for an acknowledgement from the terminal device in response to a detection of an acknowledge-based traffic type.

Additionally, the above object is achieved by an apparatus for scheduling radio resources of a terminal device, the apparatus comprising:
● checking means for checking a type of traffic to be scheduled to the terminal device in downlink direction; and
● scheduling means for scheduling an uplink grant for an acknowledgement from the terminal device in response to a detection of an acknowledge-based traffic type during the checking step.

In a first more specific exemplary implementation, the scheduling of the uplink grant may comprise extending buffer status report handling to trigger an automatic uplink buffer status update when updating a downlink status allocation for the acknowledge-based traffic type.

In a second more specific exemplary implementation which can be combined with the first more specific exemplary implementation, the detecting may be performed based on a quality of service class of the traffic to be scheduled in the downlink direction.

In a third more specific exemplary implementation which can be combined with any one of the first or second more specific exemplary implementations, the detecting may be performed based on an analysis of a data stream of the traffic to be scheduled in the downlink direction. As an example, the detecting can be performed based on an Internet Protocol (IP) header of a service data unit of the PDCP protocol.

In a fourth more specific exemplary implementation which can be combined with any one of the first to third more specific exemplary implementations, the uplink grant can be averaged so that one acknowledgement is scheduled in the uplink direction every predetermined number of bytes.

As an alternative fifth more specific exemplary implementation which can be combined with any one of the first to fourth more specific exemplary implementations, data packets of the traffic to be scheduled in the downlink direction may be counted, and uplink resources may be scheduled for acknowledgement as defined by the respective traffic type specification (e.g. TCP specification). Based on the traffic type specification the exact UL traffic amount to be expected can be derived.

The above apparatus may be implemented as a hardware circuit integrated on a single chip or chip set, or wired on a circuit board. As an alternative, at least parts of the apparatus may be implemented as a software program or routine controlling a processor or computer device. As an example, the software program or routine may be implemented in C type programming language.

Other advantageous modifications are defined in the dependent claims.

### BRIEF DESCRIPTION OF THE DRAWINGS

The invention will now be described in greater detail based on embodiments with reference to the accompanying drawings in which:
Fig. 1 shows a schematic block diagram of a scheduling apparatus according to a first embodiment;
Fig. 2 shows a flow diagram of a proactive scheduling procedure which can be applied in the first embodiment; and
Fig. 3 shows a schematic block diagram of software-based implementation according to a second embodiment.

### DESCRIPTION OF THE EMBODIMENTS

In the following, embodiments of the present invention will be described based on an implementation of a resource block scheduler or scheduling function for a LTE network. However, it is to be noted that the present invention can be applied in various other types of cellular or wireless access networks where resources are to be scheduled among different users of a transmission link.

Uplink (UL) and downlink (DL) channels in the LTE air interface are divided into frames and each frame is divided into subframes. Each subframe is divided into two time slots. Each time slot is divided in the frequency domain into a number of resource blocks (RBs). Data is allocated to UEs in terms of RBs. Depending on an OFDM sub-carrier spacing, an RB consists of 12 or 24 consecutive sub-carriers in the frequency domain. In the time domain, an RB consists of a plurality of consecutive OFDM symbols. The size of an RB is the same for all bandwidths, therefore the number of available physical resource blocks depends on the bandwidth. Depending on the required data rate, the scheduler can assign one or more RBs to each UE in each transmission time interval (TTI). The scheduling decision is done in the base station (i.e. eNB). The user data is carried on the Physical Downlink Shared Channel (PDSCH). Additionally, DL control signaling on the Physical Downlink Control Channel (PDCCH) is used to convey the scheduling decisions to individual UEs. The PDCCH is located in the first OFDM symbols of a slot.

The underlying principle of the proposed solution according to the embodiments is to extend the scheduler in the base station (i.e. eNB) to schedule UL grants for anticipated UL traffic responsive to DL traffic, when DL traffic of a bidirectional data flow is being scheduled. Thereby, any delay penalty of the terminal device to ask for UL resource can be avoided, by proactively scheduling UL resources.

Thus the scheduler is taking into account the nature of the DL data to increase the performance of the overall system, by anticipating an expected UL stream and proactively scheduling it. The bidirectional data flow or traffic may be any kind of traffic (e.g. IP based data streams) where a bi-directional data flow can be anticipated by the nature of the underlying transmission protocol.

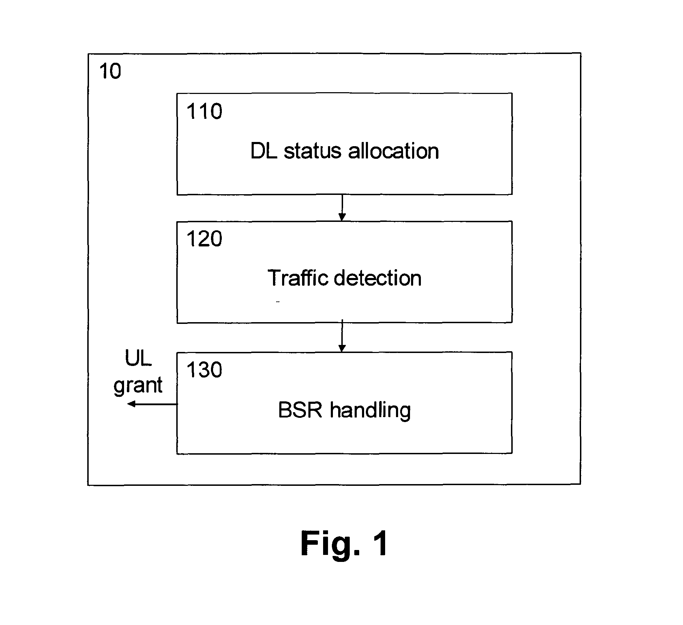

Fig. 1 shows a schematic block diagram of a scheduling apparatus or scheduler 10 according to a first embodiment which may be provided in an access device, such as an eNB. The eNB may be implemented as a software defined radio (SDR) device, where major functionalities are implemented by software routines controlling digital signal processors (DSPs).

The scheduler 10 comprises a DL status allocation function or unit 110 for allocating radio resources for DL traffic. A current DL traffic which is being scheduled is checked by a traffic detection function or unit 120 so as to detect a bidirectional type of traffic (e.g. acknowledge-based traffic or Internet traffic) where resultant UL traffic can be anticipated. Furthermore, a BSR handling function or unit 130 of the scheduler 10 is extended to trigger an automatic UL grant (e.g. by an UL buffer status update) in response to an output of the traffic detecting unit 120, which indicates that DL status allocation has been updated for a bidirectional type of traffic (e.g. acknowledge-based traffic).

It is noted that the DL status allocation block 110, the traffic detection block 120 and the BSR handling block 130 of the scheduler 10 of Fig. 1 may be implemented as discrete signal processing circuits or, alternatively, as threads or software routines.

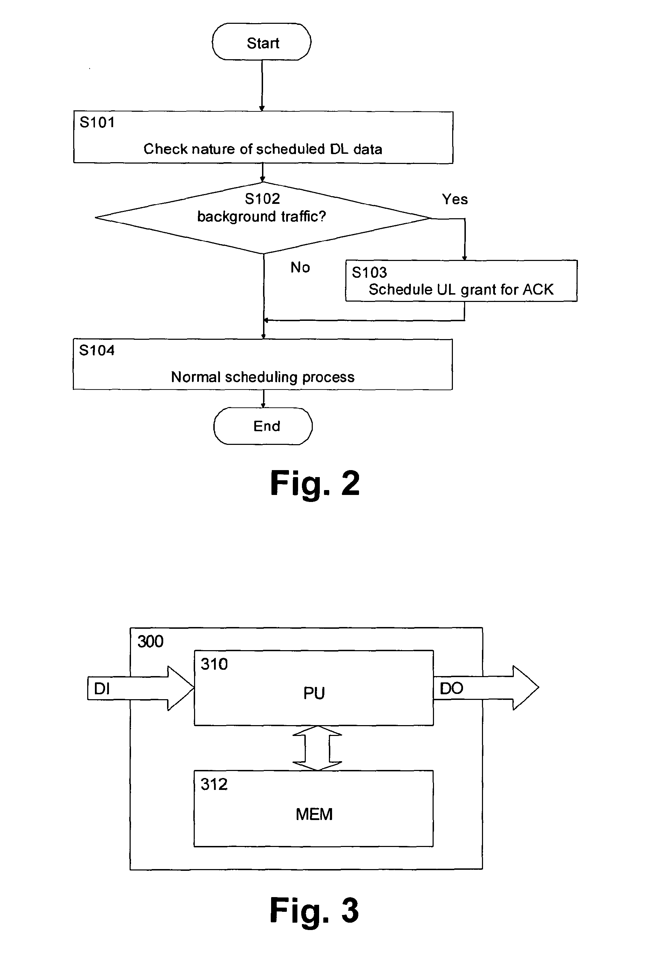

Fig. 2 shows a schematic flow diagram of a scheduling procedure for TCP traffic where the anticipated UL traffic relates to TCP ACKs. This scheduling procedure can be implemented in the above scheduler according to the first embodiment.

In step S101, the nature of type of the DL data which is being scheduled is checked to detect acknowledge-based traffic which indicates a bidirectional data flow needing proactive UL scheduling. If it is determined in the following decision step S102 that acknowledge-based traffic is being scheduled, the procedure branches to step S103 and an UL grant is scheduled for any upcoming ACK(s) in the UL direction from the terminal device in response to a receipt of the scheduled DL traffic. Then, in step S104 the normal or usual UL and DL scheduling procedure follows. If no detection of acknowledge-based traffic is determined in step S103, the procedure directly proceeds to step S104 and no proactive UL scheduling is performed.

The detection of acknowledge-based traffic in step S101 can be either just by the Quality of Service class (acknowledge-based traffic is likely to be a TCP stream) or by more detailed analysis of the data stream (e.g. IP header in the PDCP service data units (SDUs) for example).

The related UL grant in step D103 can either be averaged, e.g. per each 1500 bytes (roughly one TCP packet) one ACK in scheduled in UL (40 bytes plus 2 bytes PDCP header, plus 2 bytes RLC header). Alternatively, a more accurate implementation could count the TCP packets (full PDCP SDUs which also lead to full PDCP PDUs) and schedule UL resources for one ACK for two TCP packets.

Fig. 3 shows a schematic block diagram of an alternative software-based implementation according to a second embodiment. The required functionalities can be implemented in a baseband subsystem 300 of an eNB with a processing unit 310, which may be any processor or computer device with a control unit which performs control based on software routines of a control program stored in a memory 312. The control program may also be stored separately on a computer-readable medium. Program code instructions are fetched from the memory 312 and are loaded to the control unit of the processing unit 310 in order to perform the processing steps described in connection with of Fig. 2, which may be implemented as the above mentioned software routines. The processing steps may be performed on the basis of input data DI and may generate output data DO. In case of the proposed scheduler, the input data DI may correspond to the downlink traffic to be scheduled or to a result of traffic type detection, and the output data DO may correspond to the proactive scheduling decision for acknowledgement(s) in the uplink direction.

Consequently, the functionalities of the above embodiments may be implemented as a computer program product comprising code means for generating each individual step of the frame alignment procedure when run on a computer device or data processor of the respective entity.

In summary, a method and apparatus for scheduling radio resources of a terminal device have been described, wherein a scheduler in an access device is extended to proactively schedule uplink grants for anticipated uplink traffic (e.g. acknowledgements), when downlink traffic of a bidirectional dataflow (e.g. acknowledge-based traffic) is being scheduled. Thereby, a delay penalty of the terminal device to ask for uplink resources can be avoided.

It is apparent that the invention can easily be extended to scheduler and scheduling procedure of any access device and system and is not restricted to LTE networks. Depending on the type of bidirectional traffic which needs proactive UL scheduling, other suitable parameters could be used to detect the bidirectional traffic. The proposed embodiments can be implemented in connection with any base station or access device for scheduling radio resources in time andlor frequency domains of communication networks. The embodiments may thus vary within the scope of the attached claims.

## Claims

1. A method of scheduling radio resources of a terminal device, said method comprising:
a. detecting a type of traffic to be scheduled to said terminal device in downlink direction; and
b. scheduling an uplink grant for anticipated uplink traffic from said terminal device in response to a detection of a bidirectional traffic.

2. The method according to claim 1, wherein said scheduling of said uplink grant comprises extending buffer status report handling to trigger an automatic uplink buffer status update when updating a downlink status allocation for said bidirectional traffic.

3. The method according to claim 1 or 2, wherein said detecting is performed based on a quality of service class of said traffic to be scheduled in the downlink direction.

4. The method according to any one of the preceding claims, wherein said detecting is performed based on an analysis of a data stream of said traffic to be scheduled in the downlink direction.

5. The method according to claim 4, wherein said detecting is performed based on an Internet Protocol header of a service data unit of the Packet Data Convergence Protocol.

6. The method according to any one of the preceding claims, wherein said anticipated uplink traffic corresponds to an acknowledgement, and wherein said uplink grant is averaged so that one acknowledgement is scheduled in the uplink direction every predetermined number of bytes.

7. The method according to any one of claims 1 to 5, wherein said anticipated uplink traffic corresponds to an acknowledgement, and wherein data packets of said traffic to be scheduled in the downlink direction are counted, and uplink resources are scheduled for acknowledgement as defined by the respective traffic type specification.

8. The method according to any one of the preceding claims, wherein said acknowledge-based traffic is Transmission Control Protocol traffic.

9. An apparatus for scheduling radio resources of a terminal device, said apparatus comprising:
a. checking means (120) for checking a type of traffic to be scheduled to said terminal device in downlink direction; and
b. scheduling means (130) for scheduling an uplink grant for an anticipated uplink traffic from said terminal device in response to a detection of a bidirectional traffic during said checking step.

10. The apparatus according to claim 9, wherein said scheduling means comprises buffer status report handling means (130).

11. A network access device comprising an apparatus according to any one of claims 9 or 10.

12. A computer program product comprising code means for producing the steps of method claim 1 when run on a computer device.
